# DEMANDE DE BREVET EUROPEEN

(11) **EP 0 579 548 A1**
(43) Date de publication de la demande: **19.01.1994**
(21) Numéro de dépôt: 93401826.8
(22) Date de dépôt: 15.07.1993
(51) Int. Cl.: A01K 1/015

(54) **Litière pour animaux**

(30) Priorité: 15.07.1992 FR 9208740
(71) Demandeur: Durepaire, Jacques, F-16140 Aigre (FR)
(72) Inventeur: Penaud, Jean, F-37000 Tours (FR)
(74) Mandataire: Thibon-Littaye, Annick

(57) **Abrégé**

La présente invention concerne la réalisation de litières pour animaux constituées d'un support d'origine ligno-cellulosique intimement mélangé à des éléments biologiques, lesdits éléments comportant au moins un complexe bactérien lequel assure la transformation dirigée et la stabilisation de la matière organique provenant des déjections animales en assurant également un contrôle sur les différentes flores microbiennes, ledit complexe comportant au moins des bactéries aérobies dans une couche superficielle par laquelle le chargement en matière organique s'effectue et au moins des bactéries anaérobies dans une couche profonde.

## Description

La présente invention concerne la réalisation de litières à utilisation prolongée, pour animaux.

Elle s'applique plus particulièrement aux animaux d'élevage tels que ceux qui sont destinés à être abattus pour la consommation alimentaire, mais peut être également utilisée dans des zoo ou parcs animaliers ou encore pour des animaux domestiques.

Les élevages industriels d'animaux ont connu un essor important ces dernières années. Du fait de la superficie de ces élevages et du nombre des animaux qui produisent des déjections sur ces surfaces, il se crée un problème de coexistence entre ces animaux et leurs déjections.

L'élevage à l'échelle industrielle, notamment celui de volailles, nécessite donc l'utilisation de litières, lesquelles sont essentiellement constituées d'un support qui est le plus souvent de la paille plus ou moins finement hachée. Cependant, cette paille est relativement longue, et outre ses médiocres qualités d'absorption des déjections animales, elle entraîne des blessures, génératrices de pertes de gains, notamment sur les petits animaux. De plus, la présence des déjections dans cette paille présente des risques de contamination non négligeables, qui peuvent être cause de problèmes sanitaires secondaires qui entraînent des saisies vétérinaires en abattoir et des pertes financières par conséquent.

Le problème de coexistence entre les animaux et leurs déjections exige d'autre part des renouvellements fréquents de la litière, ce qui engendre la consommation de volumes importants de ces dernières et par suite des difficultés quant à leur élimination et ce qui représente également un frein important au développement des élevages dans la mesure où il en résulte un surcroît de coût à la fois en main-d'oeuvre et en immobilisation des locaux.

Depuis quelques années, la sciure ou les copeaux de bois sont utilisés à la place de la paille du fait de leur homogénéité et de leur meilleur pouvoir absorbant par rapport à la paille grossièrement hachée. Cependant, si l'on considère par exemple le cas des poulaillers industriels, dont la superficie d'élevage peut atteindre couramment 1 000 m², le problème de l'importance des sources d'approvisionnement en sciure ou en copeaux de bois par rapport aux besoins se pose, et par conséquent aussi celui du coût de ces litières.

Par ailleurs, les sous-produits du bois, très chargés en lignine sont très mal dégradés dans le sol après épandage. La paille reste donc encore à l'heure actuelle une matière première privilégiée pour constituer un support de litière vu son rapport qualité/prix et sa biodégrabilité. Le problème du renouvellement et du volume des litières à épandre se posent de la même façon avec la sciure et les copeaux.

On comprend donc dès lors que la paille soit également un support préféré dans le cadre de la présente invention, et ce d'autant que, comme on le verra plus loin, l'une des particularités de l'invention tire profit du broyage par voie industrielle de la paille qui permet de lui conférer une qualité supérieure à la sciure quant à l'homogénéité et au pouvoir d'absorption.

Simultanément, l'invention facilite aussi lors des premières semaines d'élevage, l'assurance d'une isolation capable de maintenir la chaleur indispensable au développement des jeunes animaux. Une division suffisamment fine du support de la litière, sans que celle-ci perde sa structure permet de conserver avantageusement, au sein de cette litière, une quantité d'air suffisante pour jouer le rôle d'un très bon isolant, efficace sans que les quantités soient très importantes.

Cependant, lors de l'utilisation de longue durée d'une litière, une bonne absorption ne suffit pas. En effet, la matière organique provenant des déjections animales va s'accumuler et se dégrader de façon non contrôlée et va provoquer notamment l'émanation d'ammoniac et la production d'amines biogènes, nocifs l'un et l'autre à la santé des animaux. De plus, les litières sont en général des réservoirs importants d'agents pathogènes et de parasites, causes de la mort des animaux les plus faibles et de médiocres performances zootechniques pour les plus résistants.

Des problèmes d'hygiène et de confort des animaux se posent donc, avec une acuité particulièrement prononcée lors de l'utilisation prolongée d'une litière, notamment lors de l'arrivée d'une nouvelle bande de jeunes animaux fragiles sur cette litière ayant déjà servie et chargée de la flore et des parasites de la bande précédente.

L'invention y apporte essentiellement une solution par la conception, la fabrication et la mise en oeuvre d'une litière qui comporte, outre un support correctement préparé, des éléments biologiques capables de transformer la matière organique de façon dirigée au fur et à mesure de sa production et de la stabiliser. Ces éléments biologiques sont intimement liés au support de façon à ce que la litière puisse être utilisée de manière prolongée sans conséquence néfaste pour les animaux qui sont élevés dessus, lesdits éléments biologiques permettant d'exercer un contrôle sur les différentes flores microbiennes et voire pour certaines d'entre-elles une élimination.

La litière permettant une utilisation prolongée par rapport à celle de l'art antérieur, selon l'invention est composée d'au moins deux couches superposées, comprenant une couche profonde et une couche de surface par laquelle s'effectue le chargement en matière organique provenant des déjections des animaux reposant sur cette litière. L'une des particularités de l'invention est en effet de créer en profondeur un foyer d'activité qui assure au cours du temps la transformation dirigée de la matière organique apportée par les déjections animales déposées sur la couche de surface et qui correspond à la couche profonde de la litière.

A cette fin, l'invention prévoit, en combinaison avec un support d'origine ligno-cellulosique, de préférence de nature fibreuse et correctement préparée,d'utiliser des éléments biologiques de transformation des déjections animales sous forme de bio-masse et de composés organiques stables. L'emprise de la bio-masse peut en outre être telle que les principaux agents pathogènes et la majorité des parasites sont supplantés et/ou détruits.

De tels éléments biologiques comportent avantageusement un complexe bactérien qui associe de préférence, au niveau de sa constitution même, au moins des bactéries aérobies dans la couche superficielle par laquelle s'effectue le chargement en matière organique provenant des déjections des animaux reposant sur la litière et au moins des bactéries anaérobies strictes dans la couche profonde. En effet, dans la couche profonde, le complexe bactérien se trouve au sein d'un milieu riche en matière organique, mais dont l'approvisionnement en oxygène est faible, voire inexistant alors que la couche superficielle se trouve à sa surface en contact avec de l'air.

On utilise de ce fait, de préférence un complexe bactérien qui présente l'avantage d'auto-adapter son activité. Ainsi dans la couche profonde, l'activité du complexe bactérien est assuré avantageusement par les bactéries anaérobies strictes alors qu'elle est assurée par les bactéries aérobies dans la couche superficielle.

Le complexe bactérien comporte en outre avantageusement des bactéries anaérobies facultatives propres à assurer au sein de la litière une transition entre la couche superficielle et la couche profonde, grâce à leur capacité à entrer en activité suivant le milieu dans lequel elles se trouvent à un moment quelconque.

Un tel complexe bactérien constitue un édifice microbien et associe donc dans son organisation les bactéries indispensables à l'activité principale comme les lactobacilles, les streptocoques, et les ba- cillus, et des bactéries peu actives au stade final, mais dont la présence est utile dans la création d'une chaîne trophique assurant le développement de cet inoculum bactérien au sein de la litière et permettant à ce dernier une prise de contrôle quantitatif sur les bactéries résultant des conditions d'élevage et de ventilation des bâtiments. De préférence, on utilise un complexe bactérien du type de celui commercialisé par la société LODI sous la dénomination commerciale "Complexe bactérien spécial industrie ENV+".

Conformément à l'invention, ce complexe bactérien est conservé sur un support spécifique qui assure la survie des bactéries entre le moment de leur production et l'instant du redémarrage de leur activité. La teneur en humidité est alors avantageusement réduite. Ce support contient également des éléments métaboliques du milieu de culture pour assurer une vitesse de prolifération optimum par simple humidification du support.

Le complexe bactérien est alors incorporé dans le support ligno-cellulosique dans des proportions variant de 0,01 % à 10 % selon la concentration animale et l'espèce en cause, et de préférence entre 0,05 et 0,15 % en poids dudit support.

Cependant ce foyer d'activité bactérienne ne peut démarrer efficacement que grâce à la présence conjointe, dans la couche profonde, d'un substrat énergétique et azoté. La paille ou tout autre support d'origine végétale ligno-cellulosiques étant caractérisés par leur pauvreté en sucres et en azote, facilement disponibles, ces éléments qui assureront le fonctionnement du foyer d'activité en profondeur seront apportés au stade de la préparation industrielle, ce qui en outre permet avantageusement de réaliser un mélange intime.

La couche superficielle, en contact direct avec les déjections des animaux, se trouve ainsi essentiellement approvisionnée en éléments azotés et parfois en éléments énergétiques. Cependant, la caractéristique des sucres résiduels présents dans les déjections est leur faible vitesse de dégradation. Il existe donc un déséquilibre entre apport énergétique et apport azoté. Pour permettre une mise en activité très rapide et efficace de ces couches superficielles, il est le plus souvent souhaitable de les enrichir en sucres facilement fermentescibles.

Ces apports en éléments énergétiques facilement fermentescibles se font notamment sous forme de mélasse. En effet, celle-ci est une matière première qui correspond bien aux exigences : elle est formée de sucres fermentescibles et elle apporte aussi un effet de collage des particules qui favorisent la mise en forme.

Mais la mélasse peut être également partiellement ou totalement remplacée par toute autre matière première riche en sucres rapidement fermentescibles tels que les dérivés de l'amidon, les sucres issus de l'industrie chimique ou agro-alimentaire.

Selon le type de support utilisé, le substrat énergétique est de préférence mixte et comporte des sucres à dégradation rapide comme ceux apportés par la mélasse et des sucres complexes à dégradation lente, comme par exemple, certains produits lourds de la dégradation des amidons ou des hémicelluloses.

En effet, si la paille apporte une quantité importante de celluloses attaquables par des cellulases bactériennes, les copeaux de bois blanc qui sont également un support possible, sont en grande majorité constitué de lignine et n'apportent aucun élément énergétique.

Dans le cas de l'utilisation de copeaux de bois blancs, le substrat énergétique est alors entièrement apporté en plus.

La mélasse est intimement mélangée au support ligno-cellulosique dans des proportions comprises entre 0,5 % et 10 % en poids dudit support, de préférence de l'ordre de 1 à 7 % et avantageusement de 5 %.

Dans le cas d'un mélange sucres lents - sucres rapides, la proportion ajoutée varie avantageusement de 0,5 % à 15 % et de préférence de 5 à 10 % en poids dudit support ligno-cellulosique.

L'apport en azote se fait avantageusement sous forme d'urée. En effet, celle-ci représente une réserve d'azote pour certaines bactéries à activité uréase plus. En l'absence d'humidité, cette urée est stable. Dans la litière profonde, l'urée assure un apport azoté dégradé au fur et à mesure des besoins. Cette action de l'urée peut être renforcée par l'adjonction d'un complexe d'acides aminés stimulant le développement bactérien.

Les apports en urée sont compris entre 0,1 % et 3 % en poids dudit support traité; le complexe d'acides aminés est ajouté dans des proportions variant de 0,05 % à 0,2 % en poids dudit support. Les proportions les plus fortes sont avantageusement utilisées lorsque le support est constitué de copeaux de bois. En effet, la teneur en azote disponible du bois est alors plus faible et encore moins disponible que pour la paille.

Dans la couche superficielle, il ne sera pas incorporé d'urée, et les besoins en acides aminés seront d'autant plus important, et pourront alors atteindre respectivement 0,1 et 0,5 % en poids desdits copeaux.

Un complexe organocalcique composé de mi- croorganismes marins calcifiés, est avantageusement incorporé afin de favoriser le développement des bactéries lactiques qui, dans le complexe bactérien, jouent un rôle de compétition et d'élimination, grâce aux bactériocines qu'elle libèrent, de nombreuses bactéries pathogènes parmi lesquelles on peut citer certaines grandes familles des colibacilles, listé- ria, salmonelles et clostridium.

Un tel complexe organocalcique présente en plus, l'avantage d'exercer un pouvoir absorbant au niveau de certains gaz délétères tel que l'ammoniac. Il empêche également de façon avantageuse la formation de l'acide sulfhydrique (H₂S).

Un taux d'incorporation de ce complexe organocalcique est avantageusement compris entre 0,1 % et 20 % en poids du support traité des litières et de préférence de 0,1 à 1 %.

La litière d'utilisation prolongée selon l'invention est composée d'au moins deux couches. La couche profonde comporte de la paille, traitée industriellement, ou tout autre support d'origine ligno-cellulosique, de la mélasse, de l'urée plus un complexe d'acides aminés, un complexe bactérien et un complexe organocalcique.

La couche superficielle comporte les mêmes éléments exceptée l'urée.

Les matériaux d'origine ligno-cellulosique sont avantageusement utilisés comme support de litière dans la mesure où ils sont riches en cellulose.

En effet, celle-ci qui est en général le polysaccharide le plus important des membranes végétales, se présente sous forme fibrillaire, offre des propriétés hydrophiles et présente ainsi une capacité de gonflement exceptionnelle qui en fait un matériau de choix pour jouer le rôle d'absorbant.

En général dans ces matériaux, la cellulose est protégée par un écran constitué par de la lignine.

Dans le cadre de l'invention, lors de l'utilisation des matériaux ligno-cellulosique, il est utile de pouvoir recourir à un traitement de préparation permettant de faire éclater la pellicule protectrice, constituée essentiellement de lignine afin d'obtenir des masses poreuses avec la fibre cellulosique et d'augmenter avantageusement la surface spécifique de la masse absorbante des fibres cellulosiques.

Des traitements de ce genre susceptibles d'être utilisés et pouvant convenir à cette application sont déjà appliqués pour d'autres applications.

On connait des traitements chimiques à base de réactifs associés à une cuisson en autoclave et des traitements mécaniques consistant à traiter les matériaux à température élevée, sous forte pression suivi d'une détente brutale.

Dans les conditions pratiques de fabrication d'une litière selon l'invention, il est avantageux et préférable de travailler la matière ligno-cellulosique à froid par un système d'attrition et friction, notamment lorsque le support est de la paille.

La densité des matériaux ligno-cellulosique ainsi préparés peut être avantageusement améliorée et permet ainsi une diminution avantageuse du volume lors des différents transports et stockages.

Par ailleurs, les cubes ou cylindres ou autres ainsi préparés ayant une forte densité servent à la confection de la couche profonde et offrent un avantage important dans la réussite de la permanence de la litière dans ce sens où elles se délitent au fur et à mesure de leur réhydratation, libérant alors progressivement les principes actifs qui génèrent la digestion et le contrôle bactérien que l'on attend de cette litière.

Par contre, le faible compactage de la couche superficielle permet facilement l'émottage au cours de la mise en place en bâtiment, assurant ainsi une surface plane et douce pour les petits animaux ; et assure également l'absorption des déjections mais elle est assez dense pour constituer une surface homogène et stable.

La sous-couche a de préférence une capacité d'expansion d'environ cinq fois son volume compacté en absorbant de l'eau.

La mise en place de cette litière travaillant par voie bactérienne ne doit intervenir qu'après un délai de 4 à 6 jours après désinfection du local afin de respecter le complexe bactérien.

Avant mise en place de la litière, il faut d'abord humidifier le sol à raison de 0,2 litre d'eau par mètre-carré, sauf dans le cas des sols bétonnés.

On étend ensuite la couche compactée sous forme d'un lit uniforme et dense.

On humidifie la partie superficielle de la couche compactée avec un arrosage en pluie fine à raison de 0,2 litre d'eau par mètre-carré. Puis, on étend pardessus la couche superficielle non compactée immédiatement après humidification de la couche compactée. Cette couche doit être homogène et bien plane.

Lors de l'utilisation de ces litières pour l'élevage de bovins, ovins, caprins, porcins, il est souvent utile de mettre en place une couche profonde et une couche superficielle puis de nouveau une couche profonde et une couche superficielle et obtenir ainsi la superposition de plusieurs litières successives conformes à l'invention. En effet, ces animaux de type fouisseur peuvent occasionner dans la couche superficielle des trous qui empêchent le bon foction- nement de la litière et qui souvent entrinent également des trous dans la couche profonde. La superposition de ces litières permet un fonctionnement constant de l'ensemble malgré les dommages qui peuvent être occasionnés dans les couches supérieures selon l'invention.

La mise en place manuelle de la litière est faite avec une réduction de temps de l'ordre de 50 % par rapport à la mise en application d'une litière à paille longue classique avec moins de travail et moins de poussière. Le format des briquettes permet également la mécanisation de l'épandage pour une application régulière et encore plus rapide.

Une litière à utilisation prolongée selon l'invention permet la biotransformation de la matière organique provenant des déjections animales amenant à la fragmentation longue des chaînes carbonées complexes, à la réorganisation de l'azote de façon à éviter une partie de l'émanation d'ammoniac et à la destruction des agents pathogènes déféqués ou se développant dans la litière.

La litière selon l'invention permet donc d'exercer par une occupation favorisée de la place, un contrôle bactérien positif correspondant au bien-être, à une meilleure santé des animaux, à des performances zootechniques améliorées et à des gains financiers accrus.

Ainsi une litière à utilisation prolongée selon l'invention, permet l'élevage de 4 à 6 bandes successives en poulets-pintades, de 3 à 5 bandes successives en dindes, de 2 bandes en canards, de 2 à 4 bandes en porcelets et de 1 à 2 bandes en porc charcutiers.

Outre les avantages déjà énoncés, les litières selon l'invention assurent par des réactions exothermiques et assureront un apport en calories non négligeable dans le bâtiment, limitant par voie de conséquence les dépenses de chauffage.

Les litières selon l'invention peuvent notamment servir de litières permanentes pour porcs et porcelets lorsqu'elles sont à base de paille ou de sciure. Elles peuvent également servir de litières permanentes pour veaux, vaches lorsqu'elles sont à base de paille, de sciure ou de copeaux. Pour toutes les espèces, les litières peuvent être à base de vieux foin ou de paille de riz, mais elles peuvent être également à base de canne à sucre, de tige de maïs, de sorgho ou de tout autre matériau ligno-cellulosique.

Le procédé selon l'invention se prête bien à une réalisation industrielle ce qui permet d'avoir une fabrication constante avec toujours les mêmes proportions des éléments et les mêmes qualités. Ceci permet en outre une mise en oeuvre facile sans éléments additionnels.

On décrira maintenant plus en détail des formes de réalisation particulières de l'invention qui en feront mieux comprendre les caractéristiques essentielles et les avantages, étant entendu toutefois que ces formes de réalisation sont choisies à titre d'exemple et qu'elle ne sont nullement limitatives.

### Exemple 1 : Préparation de la paille qui constitue un support en matériau ligne-cellulosique

Dans les conditions pratiques de réalisation selon l'invention, la paille subit d'abord un traitement mécanique sous forme d'étapes de broyage, lui assurant une fragmentation en éléments d'environ 0,5 à 4 cm de longueur mais également, un éclatement et une dilacération de la structure tubulaire du brin de paille. Les brins obtenus ont une largeur comprise entre environ 0,5 et 3 mm.

Cette qualité est obtenue par traitement de la paille par un broyeur-déchiqueteur qui accepte intégralement les bottes industrielles quel que soit leur format. La paille peut passer ensuite dans un broyeur- affineur complémentaire pour enfin passer dans un malaxeur afin de recevoir les autres constituants.

Les particules des matériaux ligno-cellulosiques sont introduites dans une chambre, perforée radialement afin d'en permettre l'évacuation. A l'intérieur de cette chambre, un système mobile, sous forme d'un ou plusieurs rouleaux cannelés, tournant à l'intérieur, va obliger les particules à avancer vers les canaux d'éjection, comme sous l'effet d'une rape.

Les particules ainsi triturées s'agglomèrent entre elles et sont expulsées sous forme de cube ou de cylindre, suivant la forme des perforations.

Une couronne peut être avantageusement installée à la périphérie de la chambre de trituration. Elle est composée de deux flasques entre lesquelles sont disposées des plaques d'écartement réglable, délimitant la forme des perforations et permettant de raffermir ou non les matériaux pré-densifiés ; on peut également diminuer avantageusement le volume de ces matériaux à l'aide d'une presse à balles à canal, avec liage ou mise en sacs permettant également de diminuer l'encombrement ou de faciliter la reprise.

### Exemple Il : Litière à utilisation prolongée pour volailles à base de paille.

La composition de la couche profonde présentera les différents éléments suivants:
- Paille. Dans le cas de litières destinées à des couvoirs, la paille peut subir un traitement thermique lui assurant une stérilisation pasteurisation pour éliminer les germes et levures apportés par la paille brute.
- Mélasse Cette mélasse est mélangée intimement à la paille dans la proportion de 5% en poids de la paille.
- L'urée Les apports en urée sont de l'ordre de 0,4% en poids de la paille traitée. Le complexe d'acides aminés est alors apporté dans la proportion de 0,04 % en poids de la paille traitée.
- Complexe bactérien Le taux d'incorporation du complexe bactérien suivant la concentration animale et l'espèce en cause est compris entre 0,05 et 10% en poids de la paille à traiter. Dans le cas des volailles il est de 0,4 %.
- Complexe organocalcique Le taux d'incorporation de ce complexe organocalcique est variable en fonction du type de litière. Pour les poulets, canards, dindes, pintades, il est compris entre 0,1 et 20% en poids de la paille à traiter, et de préférence de l'ordre de 1 %. La composition de la couche superficielle sera la même que pour la couche profonde exceptée l'urée.

Les éléments, autres que le complexe bactérien, pour la couche profonde et la couche superficielle, sont ajoutés à la paille dans un mélangeur à bras. Le mélange est ensuite introduit dans une presse radiale à couronne longue produisant des parallélépipèdes de section 30 mm sur 30 mm, et de longueur variant de 1 cm pour la couche superficielle à 5 cm pour la couche en profondeur. Le complexe bactérien est de préférence, amené dans le mélange avant le passage de celui-ci dans la presse. Il peut être également amené après le passage du mélange à la presse, selon les conditions de travail recherchées pour ledit complexe. En ce cas, on utilise un procédé de saupoudrage extérieur des briquettes formées après le passage à la presse du mélange.

Les briquettes ainsi obtenues ont une densité vraie proche de 1 et une densité vrac de l'ordre de 0,6 ; ce qui assure un gain de place important pour le stockage et le transport diminuant ainsi les coûts de logistique.

### Exemple III : Litières à utilisation prolongée pour volailles à base de copeaux de bois blancs

Composition de la couche profonde :
- Copeaux de bois blancs.
- Mélasse et sucres fermentescibles. Ce mélange sucres lents et rapides doit être apporté dans des proportions de 3 à 4 % pour les sucres lents et de 4 % pour les sucres rapides en poids des copeaux. Dans le cas présent, la proportion est de préférence de l'ordre de 6%.
- Urée plus complexes d'acides aminés. La proportion de l'urée est de préférence de l'ordre de 0,4 % et celle du complexe d'acides aminés est de préférence, 0,04 %.
- Complexe bactérien. Le complexe bactérien est apporté dans les mêmes proportions qu'avec la paille soit 0,4 %. Il en sera de même pour le complexe organocalcique soit 0,4 %.

Les copeaux de bois blancs sont utilisés sans préparation particulière s'ils ont une teneur en matière sèche supérieure à 80%. Dans le cas contraire, un pré-séchage doit être mis en oeuvre. Le brassage des différents ingrédients dans la mélangeuse doit être suffisamment doux pour éviter la réduction à l'état de poussière des copeaux.

Les quantités à prévoir pour la réalisation d'une litière à base de copeaux de bois blanc sont les mêmes qu'avec la paille.

## Revendications

1/ Litière pour animaux caractérisée en ce qu'elle est constituée d'un support d'origine ligno-cellulosique intimement mélangé à des éléments biologiques, lesdits éléments comportant au moins un complexe bactérien lequel assure la transformation dirigée et la stabilisation de la matière organique provenant des déjections animales en assurant également un contrôle sur les différentes flores microbiennes, ledit complexe comportant au moins des bactéries aérobies propres à être actives dans une couche superficielle par laquelle le chargement en matière organique s'effectue, au moins des bactéries anaérobies strictes propres à être actives dans une couche profonde et au moins des bactéries anaérobies facultatives propre à être actives dans la couche profonde et/ou dans la couche superficielle assurant une transition entre la couche profonde et la couche superficielle.

2/ Litière selon la revendication 1 caractérisée en ce que ledit complexe bactérien est ajouté au support dans de proportions variant de 0,01 à 10 % en poids du support selon la concentration animale et l'espèce en cause et de préférence, entre 0,05 et 0,15 %.

3/ Litière selon les revendications 1 à 2 caractérisée en ce que le matériau constituant le support ligno-cellulosique est de la paille.

4/ Litière selon les revendications 1 à 3 caractérisée en ce que lesdits éléments biologiques comportent des éléments énergétiques et azotés propres à favoriser l'activité du complexe bactérien.

5/ Litière selon la revendication 4 caractérisée en ce que les apports en éléments énergétiques sont effectués sous forme de sucres rapidement fermentescibles et notamment sous forme de mélasse.

6/ Litière selon la revendication 5 caractérisée en ce que les apports en mélasse sont effectués dans des proportions variant de 0,5 à 10 % et de préférence de 1 à 7 % en poids du support.

7/ Litière selon la revendication 6 caractérisée en ce que les éléments azotés sont apportés sous forme d'urée dans une proportion variant de 0,1 à 3 % en poids du support.

8/ Litière selon la revendication 7 caractérisé en ce qu'un complexe d'acides aminés est également ajouté au support dans des proportions variant de 0,05 à 0,2 % en poids dudit support.

9/ Litière selon les revendications 1 à 8 caractérisée en ce que la matière ligno-cellulosique est de la paille préalablement soumise à un traitement mécanique de broyage et déchiquetage permettant l'obtention de brins ayant notamment une largeur comprise entre 0,5 et 3 mm et une longueur comprise entre 0,5 et 4 cm, ainsi que l'éclatement des pellicules protectrices, constituées essentiellement de lignine et l'obtention de masses poreuses absorbantes de fibres cellulosiques à surface spécifique augmentée.
